# EUROPEAN PATENT APPLICATION

(11) **EP 1 596 587 A2**
(43) Date of publication of application: **16.11.2005**
(21) Application number: 05009305.3
(22) Date of filing: 28.04.2005
(51) Int. Cl.: H04N 5/44

(54) **Portable television receiver**

(30) Priority: 13.05.2004 JP 2004143454
(71) Applicant: MATSUSHITA ELECTRIC INDUSTRIAL CO., LTD., Kadoma-shi, Osaka 571-8501 (JP)
(72) Inventor: Adachi, Kenji, Nagoya-shi Aichi 464-0850 (JP); Asayama, Osamu, Nagoya-shi Aichi 467-0863 (JP)
(74) Representative: Pautex Schneider, Nicole Véronique

(57) **Abstract**

The present invention provides a mobile device having a TV function that displays radio wave receiving quality information and allows an available channel to be easily selected. The mobile device has antenna (11), tuner unit (41) connected to antenna (11), baseband processing unit (42) connected to an output unit of tuner unit (41), display unit (31) to which an output of baseband processing unit (42) is supplied, and control unit (43) connected to them. The mobile device supplies station selection data from control unit (43), sequentially scans TV broadcast waves with tuner unit (41), acquires information of radio wave receiving quality of each of TV broadcast waves received at that time, and arranges and displays a plurality of pieces of information of the radio wave receiving quality on display unit (31). Thus, search for an available channel is not required.

## Description

### FIELD OF THE INVENTION

The present invention relates to a mobile device that is stored in a portable case, receives television broadcast waves, and displays them on a display unit.

### BACKGROUND ART

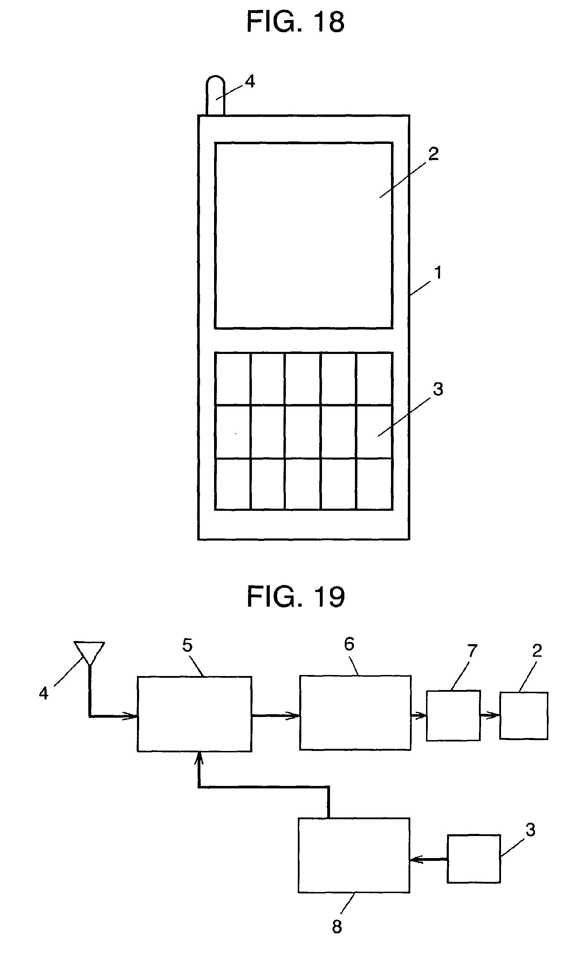

A conventional mobile device for receiving television (TV) broadcast waves is described hereinafter. Fig. 18 is a plan view of the conventional mobile device. In Fig. 18, display unit 2 is disposed in the upper part of the surface of portable case 1, and key board 3 is disposed in the lower part. Antenna 4 is disposed at the upper end of case 1.

Fig. 19 is a block diagram of the mobile device. Antenna 4 for receiving the TV broadcast waves is connected to tuner unit 5. The output unit of tuner unit 5 is connected to baseband processing unit 6, and the output unit of baseband processing unit 6 is connected to display unit 2 via driver 7. Control unit 8 is connected to tuner unit 5 and key board 3.

In the mobile device having this configuration, a desired channel (or a broadcasting station) is fed from key board 3. Station selection data is then supplied from control unit 8. The station is selected in tuner unit 5 based on the station selection data.

In other words, a signal corresponding to the selected broadcasting station is selected from a plurality of TV broadcast waves fed from antenna 4, and is converted to a baseband signal. The baseband signal is then demodulated by baseband processing unit 6, and is converted to a video signal. The video signal is displayed on display unit 2 via driver 7. In other words, the TV broadcast selected by key board 3 can be enjoyed with display unit 2.

As document information of the conventional art related to the present invention, Japanese Patent Unexamined Publications No. 2003-023663 and No. 2004-112806 are known, for example.

However, a mobile device is intrinsically often used in a place having a bad situation of the TV radio waves. In such a place, even when a user specifies a desired channel, the user cannot always watch the channel because of the bad radio wave situation.

In this case, the user must specify the channels one by one to sequentially search for available channels, or stop watching TV.

The object of the present invention is to provide a mobile device that does not require search for available channels.

For addressing the object, the mobile device of the present invention supplies the station selection data from the control unit, sequentially scans TV broadcast waves with the tuner unit, acquires information of radio wave receiving quality of each TV broadcast wave received at that time, and displays the information of the radio wave receiving quality on the display unit. Thus, initial object can be addressed.

### SUMMARY OF THE INVENTION

The mobile device of the present invention supplies the station selection data from the control unit, sequentially scans TV broadcast waves with the tuner unit, acquires information of radio wave receiving quality of each TV broadcast wave received at that time, arranges a plurality of pieces of information of the radio wave receiving quality, and displays them on the display unit.

In other words, the present invention provides a mobile device that receives the TV broadcast waves, displays them, and is stored in a portable case. The mobile device has the following elements:
an antenna for receiving the TV broadcast waves;
a tuner unit that is connected to the antenna, receives a plurality of TV broadcast waves, and selects a station;
a baseband processing unit connected to the output unit of the tuner unit.
The mobile device further has a display unit connected to the output unit of the baseband processing unit via a driver, and a control unit connected to the tuner unit, the baseband processing unit, and the driver. The mobile device supplies the station selection data from the control unit, sequentially scans the TV broadcast waves with the tuner unit, acquires information of radio wave receiving quality of each TV broadcast wave received at that time from the baseband processing unit, and displays the information of the radio wave receiving quality with different display area size or color every TV broadcast wave.

In this configuration, the radio wave receiving qualities of all receivable broadcasting stations at the present place are arranged and displayed on the same screen, so that a desired station can be easily selected from the stations.

### BRIEF DESCRIPTION OF THE DRAWINGS

Fig. 1 is a block diagram of a mobile device in accordance with exemplary embodiment 1 of the present invention.
Fig. 2 is a block diagram of a transmitting/receiving unit for mobile phone of the mobile device in accordance with exemplary embodiment 1.
Fig. 3 shows a memory map of the mobile device in accordance with exemplary embodiment 1.
Fig. 4 is a flow chart of channel scan of the mobile device in accordance with exemplary embodiment 1.
Fig. 5 is a flow chart of channel selection of the mobile device in accordance with exemplary embodiment 1.
Fig. 6 is a flow chart of watch stop of the mobile device in accordance with exemplary embodiment 1.
Fig. 7 is a perspective view of a mobile device with the case opened in accordance with exemplary embodiment 2 of the present invention.
Fig. 8 is a perspective view of a mobile device with the case closed and overlaid on it in accordance with exemplary embodiment 2.
Fig. 9 is a first state diagram of a sub display unit of a mobile device in accordance with exemplary embodiment 3 of the present invention.
Fig. 10 is a second state diagram of the sub display unit of the mobile device in accordance with exemplary embodiment 3.
Fig. 11 is a third state diagram of the sub display unit of the mobile device in accordance with exemplary embodiment 3.
Fig. 12 is a fourth state diagram of the sub display unit of the mobile device in accordance with exemplary embodiment 3.
Fig. 13 is a state diagram of a sub display unit of another mobile device in accordance with exemplary embodiment 3.
Fig. 14 is a first state diagram of a display unit of the mobile device in accordance with exemplary embodiment 3.
Fig. 15 is a second state diagram of the display unit of the mobile device in accordance with exemplary embodiment 3.
Fig. 16 is a third state diagram of the display unit of the mobile device in accordance with exemplary embodiment 3.
Fig. 17 is a block diagram of a mobile device in accordance with exemplary embodiment 4 of the present invention.
Fig. 18 is a plan view of a conventional mobile device.
Fig. 19 is a block diagram of the conventional mobile device.

### DETAILED DESCRIPTION OF THE INVENTION

### (FIRST EMBODIMENT)

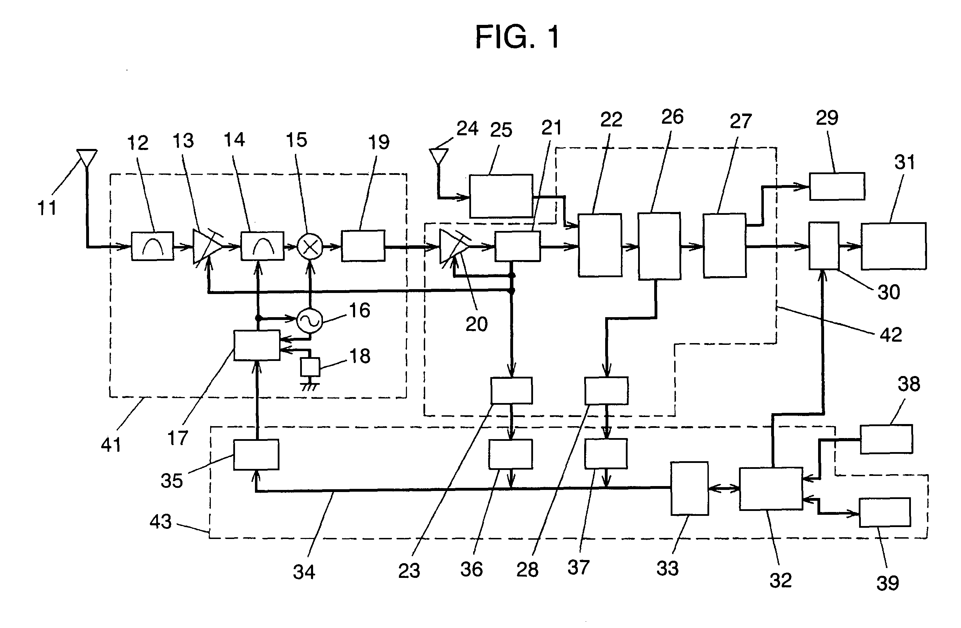

Exemplary embodiments of the present invention will be described hereinafter with reference to the drawings. Fig. 1 is a block diagram of a mobile device in accordance with exemplary embodiment 1 of the present invention. In Fig. 1, analog broadcast waves are fed into antenna 11 into which digital broadcast waves are fed. Antenna 11 is connected to input filter 12. The output unit of input filter 12 is connected to tuned filter 14 through radio-frequency automatic gain control (RFAGC) 13.

The output unit of tuned filter 14 is connected to one input unit of mixer 15, and the output unit of local oscillator 16 is connected to the other input unit of mixer 15. The output unit of local oscillator 16 is connected to one input unit of phase lock loop (PLL) circuit 17, and the other input unit of PLL circuit 17 is connected to reference oscillator 18. The output unit of PLL circuit 17 is connected to the input unit of local oscillator 16 and a control terminal of tuned filter 14.

The output unit of mixer 15 is connected to intermediate-frequency filter (hereinafter referred to as "IF filter") 19. The output unit of IF filter 19 is connected to level detector 21 through intermediate-frequency automatic gain control (IFAGC) 20. The output unit of level detector 21 is connected to one input unit of orthogonal frequency division multiplexing (OFDM) demodulator 22, and is connected to the input unit of received signal strength indicator (RSSI) (receiving strength of a radio wave, and a combined value of a noise and a signal) detector 23. The output unit of level detector 21 is also connected to control terminals of RFAGC 13 and IFAGC 20.

Antenna 24 for mobile phone is connected to the other input unit of OFDM demodulator 22 through transmitting/receiving unit 25 for mobile phone. The output unit of OFDM demodulator 22 is connected to decoding circuit (decoder) 27 through error correction circuit 26. The output unit of error correction circuit 26 is also connected to carrier-to-noise (C/N) detector 28.

Speaker 29 is connected to the output unit of decoding circuit 27. Speaker 29 may be an earphone. Display unit 31 is connected to the output unit of decoding circuit 27 through driver 30. Display unit 31 may employ liquid crystal. Display unit 31 may be a plasma display or a light emitting diode.

Controller 32 is connected to control line 34 via control bus 33. Control line 34 is connected to a data terminal of PLL circuit 17 through station selection circuit 35. The output unit of RSSI detector 23 and the output unit of C/N decoder 28 are connected to control line 34 via alternating/direct (A/D) converters 36 and 37, respectively.

Key board 38 prepared as one of input units is connected to controller 32. As an input unit, a light pen, a touch panel, or a voice can be used in addition to key board 38. Memory 39 is connected to controller 32.

Tuner unit 41 is formed of input filter 12, RFAGC 13, tuned filter 14, mixer 15, local oscillator 16, PLL circuit 17, reference oscillator 18, and IF filter 19.

Baseband processing unit 42 is formed of IFAGC 20, level detector 21, OFDM demodulator 22, RSSI detector 23, error correction circuit 26, decoding circuit 27, and C/N detector 28.

Control unit 43 is formed of controller 32, control bus 33, control line 34, station selection circuit 35, A/D converters 36 and 37, and memory 39.

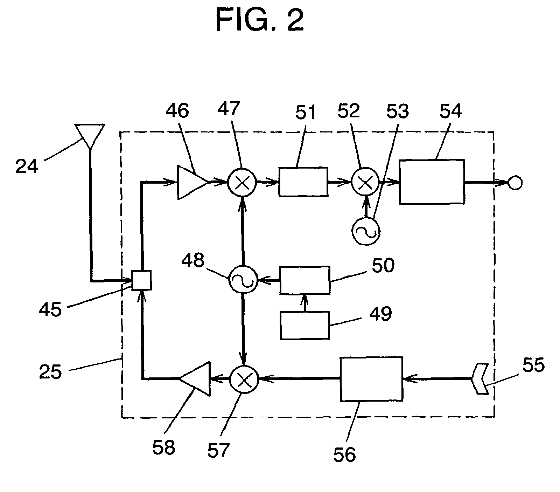

Fig. 2 is a block diagram of transmitting/receiving unit 25 for mobile phone. Antenna 24 for mobile phone is connected to transmit-receive switch 45, one terminal of transmit-receive switch 45 is connected to one input unit of mixer 47 through low-noise amplifier 46.

The output unit of local oscillator 48 is connected to the other input unit of mixer 47, and PLL circuit 50 connected to quartz oscillator 49 is connected to local oscillator 48.

The output unit of mixer 47 is connected to one input unit of mixer 52 via band-pass filter 51. The output unit of local oscillator 53 is connected to the other input unit of mixer 52. The output unit of mixer 52 is connected to demodulator 54, and the output unit of demodulator 54 is connected to the input unit of OFDM demodulator 22 of baseband processing unit 42.

Microphone 55 is connected to one input unit of mixer 57 via modulator 56. The output unit of local oscillator 48 is connected to the other input unit of mixer 57. The output unit of mixer 57 is connected to the other terminal of transmit-receive switch 45 through power amplifier 58.

Operations of the mobile device having this configuration are described hereinafter. A station is selected from digital TV radio waves fed into antenna 11 in tuned filter 14, mixer 15, and IF filter 19.

When a channel number (broadcasting station name) of a desired broadcast is selected with key board 38, the station selection data of the desired channel, namely the desired signal, is output from controller 32 via station selection circuit 35, and this station selection data is supplied to PLL circuit 17. PLL circuit 17 forms a closed loop with local oscillator 16, the oscillation frequency of local oscillator 16 is compared with reference oscillator 18, and the frequency corresponding to the desired station is supplied from local oscillator 16 to mixer 15. An intermediate frequency (about 45 kHz) is generated from the difference between the output and input frequencies of local oscillator 16, and is passed through IF filter 19. The center frequency of tuned filter 14 is controlled with output voltage of PLL circuit 17 so that the desired broadcast wave is passed through the filter. In other words, the desired broadcast wave is selected.

The desired broadcast wave selected by tuner unit 41 is fed into subsequent baseband processing unit 42. Baseband processing unit 42 restores a video signal from the input signal, and displays the video signal on display unit 31. Thus, the desired TV broadcast can be enjoyed with the mobile device.

The level of the input signal is detected by level detector 21, gains of RFAGC 13 and IFAGC 20 are controlled, and the level is detected by RSSI detector 23. The output from RSSI detector 23 is converted to a digital value by A/D converter 36, and fed to controller 32. In this process, the receiving strength level of the radio wave is detected, and its response speed is high. The radio wave receiving quality of the output of RSSI detector 23 is evaluated based on the radio wave strength including the noise, so that an output having an apparently high radio wave receiving quality is obtained from a signal having even strong noise, for example.

An error of the input signal is corrected by error correction circuit 26. A ratio of the carrier to the noise in the output of error correction circuit 26 is calculated by C/N detector 28. The output of C/N detector 28 is converted to a digital value by A/D converter 37, and is fed into controller 32. In this process, the error of the input signal is detected. Its response speed is low, but the signal quality can be detected based on the relation with the noise. Therefore, even when the signal has a high level, the radio wave receiving quality is low (bad) when the noise level is high.

Thus, the station selection data is supplied from station selection circuit 35 to PLL circuit 17 sequentially from a lower channel. When the station is selected by tuner unit 41, the strength level of the TV broadcast wave fed into antenna 11 is supplied from RSSI detector 23. C/N information is supplied from C/N detector 28. In exemplary embodiment 4 discussed later, instead of the C/N information supplied from C/N detector 28, S/N (signal to noise) information is supplied from S/N detector 125.

A mobile device of exemplary embodiment 1 can be used as a mobile phone. In other words, as shown in Fig. 2, a radio wave (about 800 MHz to 2 GHz) for mobile phone is received by antenna 24, the radio wave is combined with a wave having the oscillation frequency of local oscillator 48 by mixer 47, then is combined with a wave having the frequency of local oscillator 53 by mixer 52 to be converted to a base band, and then demodulated by demodulator 54. The resultant signal is supplied to speaker 29 via baseband processing unit 42, and is displayed on display unit 31.

A voice fed into microphone 55 is modulated by modulator 56, is then combined with an output of local oscillator 48 by mixer 57 to become a carrier wave, and is emitted from antenna 24.

The mobile device of exemplary embodiment 1 can be simplified and downsized, because the mobile TV and the mobile phone are stored in the same case.

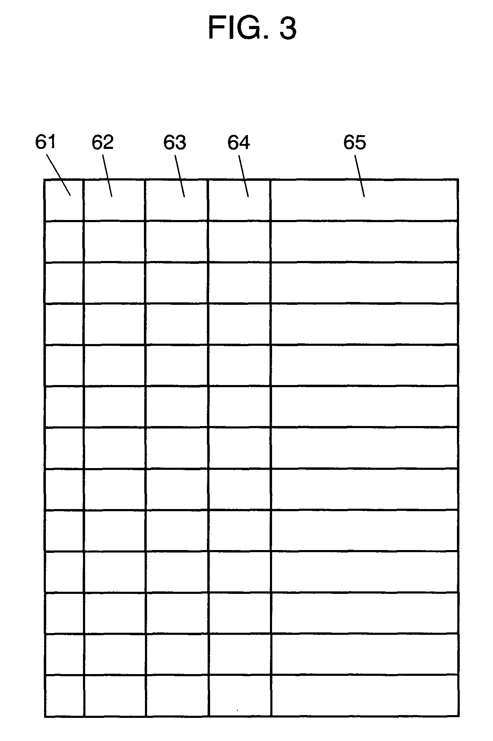

Fig. 3 shows a memory map of scan information stored in memory 39 connected to controller 32. Station selection data is transmitted from station selection circuit 35, and information of the radio wave receiving quality obtained at the present time and in the present place is stored. In Fig. 3, channel numbers are stored in channel number storage region 61. Broadcasting station names corresponding to the channel numbers are stored in station name storage region 62.

The channel numbers are scanned, and the information of the radio wave receiving quality obtained at that time is stored in storage regions 63, 64 and 65. The information is stored every channel number. In other words, RSSI information detected by RSSI detector 23 is stored in storage region 63. C/N information detected by C/N detector 28 is stored in storage region 64. Acquired image information (information of one screen) is stored in storage region 65. Only the address of the image information may be stored in storage region 65, and the image information may be stored in the other part of memory 39.

The display of the radio wave receiving quality information is described hereinafter with reference to Fig. 1, Fig. 3, and Fig. 4,. A channel scan button on key board 38 of Fig. 1 is pushed (step 71). Control unit 43 of the mobile device turns on the power of tuner unit 41, and outputs station selection data sequentially from a lower channel (channel number is small) (step 72).

Tuner unit 41 selects the channel corresponding to the station selection data (step 73). Thus, tuner unit 41 selects the TV broadcasting wave corresponding to the station selection data. Then, RSSI information corresponding to the level of the received signal of the TV broadcasting wave is supplied from RSSI detector 23 of baseband processing unit 42 (step 74).

The RSSI information is converted to a digital value by A/D converter 36. The RSSI information is then stored together with the channel number in RSSI voltage storage region 63 of memory 39 (step 75). At this time, the channel number and the station name are stored.

Similarly, C/N information is transmitted from C/N detector 28. The C/N information is converted to a digital value by A/D converter 37. The C/N information is stored in C/N data region 64 related to the channel number in memory 39 (step 76). The image data corresponding to one screen of the selected channel is also stored in image data storage region 65.

It is determined whether or not there is a channel to be scanned (step 77). When there is the channel to be scanned, next station selection data is moved from station selection circuit 35 of control unit 43 to step 78, and returned to step 73. When there is no channel to be scanned in step 77, desired information of the channel numbers, broadcasting station names, RSSI information, C/N information, and image information in respective storage regions of memory 39 is transmitted from controller 32 of control unit 43 toward driver 30 (step 79).

Based on the information, a plurality of pieces of desired information are arranged and displayed on display unit 31 together with the channel number or broadcasting station name (step 80). Therefore, an operator is not required to actually sequentially push the station selection buttons for confirming which station's image can be received. By changing the display area or color, level of the radio wave receiving quality can be also displayed. The display pattern is described later.

The description discussed above shows normal mode, and not only RSSI information but also C/N information is used, so that high radio wave receiving quality can be displayed. When step 76 of storing C/N information is skipped, high-speed mode is obtained and high-speed surface (speed several times that of reference mode) is allowed. In exemplary embodiment 4 discussed later, instead of the C/N information, the S/N information supplied from S/N detector 125 is used.

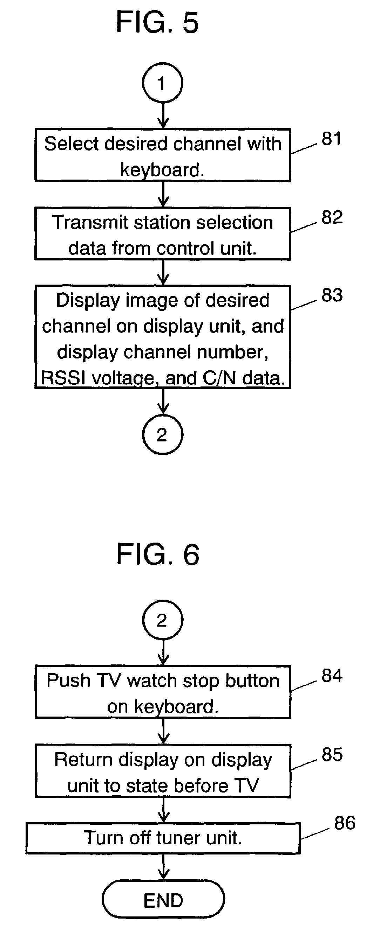

The selection of the desired channel is described with reference to Fig. 5. A desired channel (or channel number or broadcast station name) is selected with key board 38 of Fig. 1 (step 81).

Station selection data is transmitted from station selection circuit 35 of control unit 43 toward PLL circuit 17 of tuner unit 41 (step 82). Thus, the station is selected by tuner unit 41, and the radio wave of the desired station is selected.

The signal of the selected broadcasting station is displayed on display unit 31 via baseband processing unit 42. The channel number, broadcasting station name, RSSI information, C/N information, and image information are also displayed in response to a desired operation (step 83).

The C/N information is displayed in high-speed mode. In exemplary embodiment 4 discussed later, the S/N information is used instead of the C/N information.

The watch stop is described with reference to Fig. 6. A watch stop button is pressed with key board 38 of Fig. 1 (step 84). Controller 32 of control unit 43 then outputs, toward driver 30, a signal for returning display unit 31 to the state before TV watch. The display on display unit 31 is thus returned to the state before TV watch (step 85). Tuner unit 41 is turned off (step 86). Thus, the power can be saved.

### (SECOND EMBODIMENT)

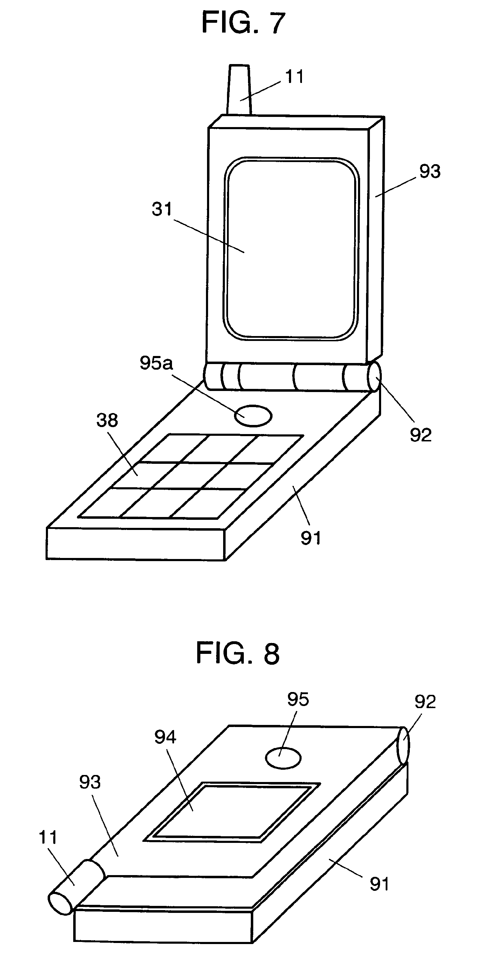

Mounting a mobile device into a case is described in exemplary embodiment 2. Hinge unit 92 is disposed on respective end sides of first case 91 and second case 93 in Fig. 7 and Fig. 8. Second case 93 is disposed openably or closably via hinge unit 92. In Fig. 7, first case 91 and second case 93 are mutually opened via hinge unit 92. In Fig. 8, first case 91 and second case 93 are closed via hinge unit 92. In the closed state, first case 91 is overlaid on second case 93, and the closed size is compact and is suitable for carry.

Antenna 24 for mobile phone, transmitting/receiving unit 25 for mobile phone, control unit 43, and microphone 55 shown in Fig. 1 and Fig. 2 are disposed in first case 91.

Display unit 31 is exposed on the overlaid surface of second case 93 on first case 91. Tuner unit 41, baseband processing unit 42, speaker 29, and antenna 11 for TV are disposed in second case 93 disposed on the back surface side of display unit 31. Antenna 11 (not shown) can be extended from the state of Fig. 7 (this is also shown in Fig. 8, but is represented by Fig. 7 hereinafter) to the outside of second case 93. Antenna 11 after use can be contracted and a large part of it can be stored in second case 93 as shown in Fig. 7.

In Fig. 8, sub display unit 94 is disposed in second case 93. Sub display unit 94 is exposed on the opposite side to the surface having display unit 31. On second case 93, display unit 31 comes into view when first case 91 and second case 93 are mutually opened, or sub display unit 94 comes into view when first case 91 and second case 93 are closed and overlaid.

Keyboard 38 is disposed on the surface of first case 91 on the second case 93 side as shown in Fig. 7, and transmitting/receiving unit 25 for mobile phone and control unit 43 are disposed on the back side of keyboard 38. Shield surfaces (not shown) are disposed on the first case 91 and second case 93 sides of hinge unit 92.

Demodulator 54 and modulator 56 are disposed in transmitting/receiving unit 25 for mobile phone as shown in Fig. 2.

Fig. 7 shows a state of the mobile device set when an operator makes a call or watches TV, and second case 93 is erected on first case 91 via hinge 92. When watching TV is described as an example, antenna 11 is extended on second case 93, keyboard 38 is then operated, and various functions installed in the TV are operated.

In Fig. 1, when a channel desired by the operator is input with keyboard 38 and selected with tuner unit 41, the video is displayed on display unit 31 via baseband processing unit 42. A voice is transmitted from speaker 29. In exemplary embodiment 4 discussed later, baseband processing unit 120 is used instead of baseband processing unit 42.

The operator can enjoy a TV program. At this time, transmitting/receiving unit 25 is kept in an operation state regardless of whether or not the operator watches TV. In other words, transmitting/receiving unit 25 emits a radio wave indicating the own position from antenna 24 for phone to a fixed station. During a phone call, definitely, transmission and receiving are performed from antenna 24 as appropriate.

In other words, even while the operator watches TV or makes a call, the TV function or phone function is kept in a start-up state. In exemplary embodiment 2, a signal for TV and a signal for phone hardly interfere with each other in any case, and appropriate TV and phone conversation can be enjoyed.

That is because transmitting/receiving unit 25 and tuner unit 41 are separately arranged in first case 91 and second case 93, respectively. This separate arrangement increases the physical distance between transmitting/receiving unit 25 and tuner unit 41 and hence extremely reduces the interference between them.

Since transmitting/receiving unit 25 and tuner unit 41 are separately disposed in first case 91 and second case 93, respectively, and the shield surfaces are disposed on both sides of hinge unit 92, the interference between them is further reduced.

The shield surfaces can increase the receiving sensitivities of antenna 11 for TV and antenna 24 for phone. Mirror effect accompanying ground enhancement causes this increase.

Since first case 91 and second case 93 are openable and closable via hinge unit 92 in exemplary embodiment 2, the overlaid state of first case 91 and second case 93 can be changed to an opened state. However, these cases are overlaid or opened also when one of the first and second cases is slid or horizontally opened or closed.

### (THIRD EMBODIMENT)

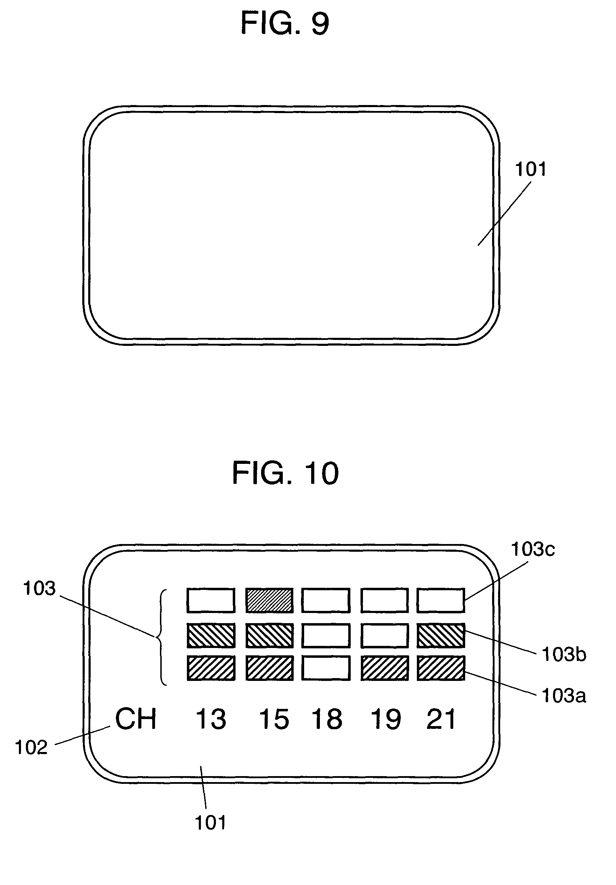

Display of the radio wave receiving quality of a mobile device of the present invention is described in exemplary embodiment 3. Fig. 9 to Fig. 13 show examples of screen 101 displayed on sub display unit 94.

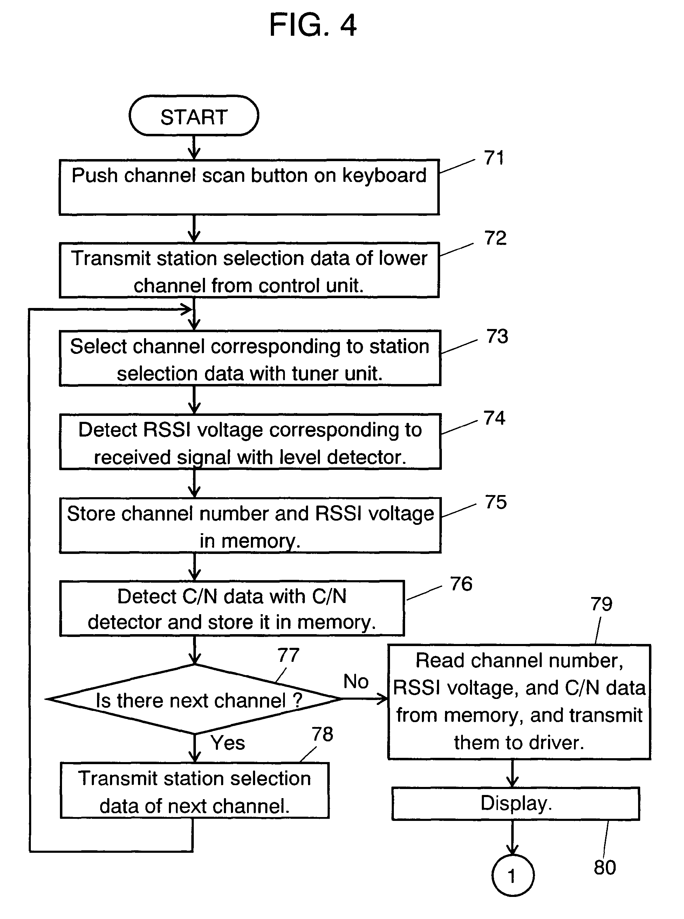

Fig. 9 shows screen 101 of sub display unit 94 in a waiting state. In this state, when channel scan button 95 (Fig. 8) on keyboard 38 (Fig. 1 and Fig. 7) is pushed, scan is performed from a lower channel as discussed in the flowchart of Fig. 4, and the radio wave receiving quality at the present time and in the present place is displayed like a band in Fig. 10.

Channel scan button 95 is disposed on the sub display unit 94 side of second case 93 so as to allow the operation in the closed state of first case 91 and second case 93. Channel scan button 95a (Fig. 7) used when first case 91 and second case 93 are opened is disposed on the keyboard 38 side of first case 91, but keyboard 38 may be substituted for channel scan button 95a.

Fig. 10 shows radio wave receiving quality 103 at the present time and in the present place with respect to each of channel numbers 102 that are arranged in a line from the lower channel. Radio wave receiving quality 103 is represented by a bar graph, for example. In other words, the display area is increased with increase in radio wave receiving quality 103.

In Fig. 10, channel (CH) 15 has the largest display area and hence has the highest radio wave receiving quality 103. No radio wave receiving quality is displayed with respect to CH 18. In other words, CH 18 cannot be received in this place.

In screen 101, radio wave receiving quality 103a corresponds to a slightly receivable state, radio wave receiving quality 103b corresponds to a normally receivable state, and radio wave receiving quality 103c corresponds to a sufficiently receivable state. Respective colors corresponding to radio wave receiving qualities 103a, 103b and 103c may be made different. When radio wave receiving quality 103a corresponds to red, radio wave receiving quality 103b corresponds to yellow, and radio wave receiving quality 103c corresponds to blue, for example, radio wave receiving quality 103 can be represented only by the colors.

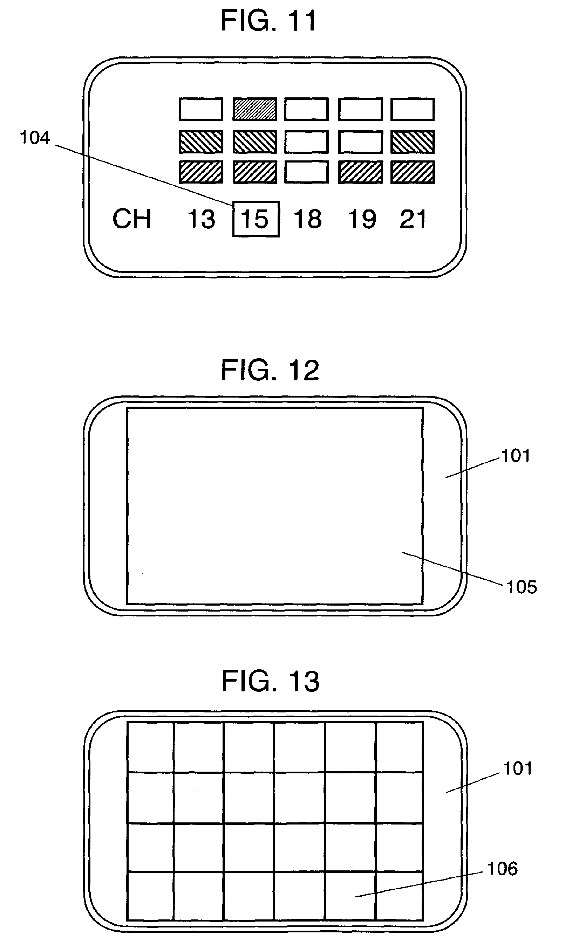

When channel scan button 95 (Fig. 8) is pushed in this state, cursor 104 moves sequentially every push as shown in Fig. 11. When a desired channel is pushed for some long time, TV screen 105 is displayed on screen 101 as shown in Fig. 12.

As shown in Fig. 13, samnail display 106 where the radio wave receiving quality is represented by a still image may be employed. When second case 93 (Fig. 7) is opened, the image on sub display unit 94 (Fig. 8) is moved on display unit 31. The screen of display unit 31 is larger than that of sub display unit 94.

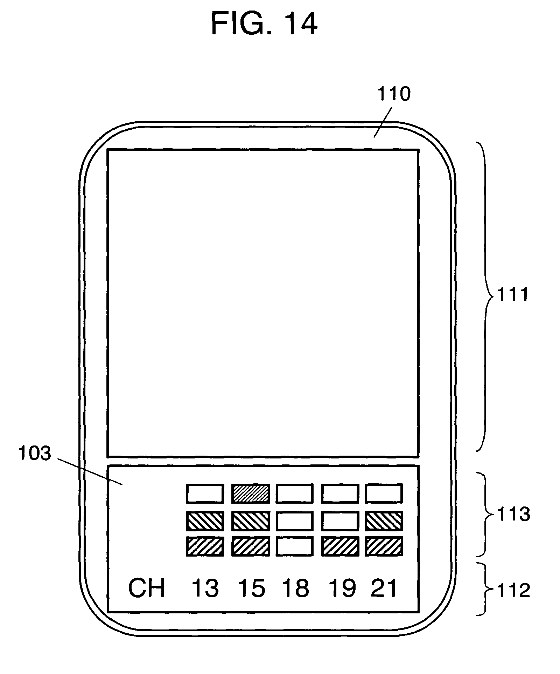

Fig. 14 shows a screen displayed when second case 93 is opened, radio wave receiving quality 103 and a TV image are simultaneously displayed on display unit 31. The TV broadcast image is displayed in upper part 111 on screen 110, channel numbers are displayed in lower part 112, and radio wave receiving quality 103 corresponding to each channel number is displayed in upper part 113 of lower part 112. The radio wave receiving quality is the same as that on sub display unit 94. An operation at this time may be performed with keyboard 38 as well as channel scan button 95a shown in Fig. 7.

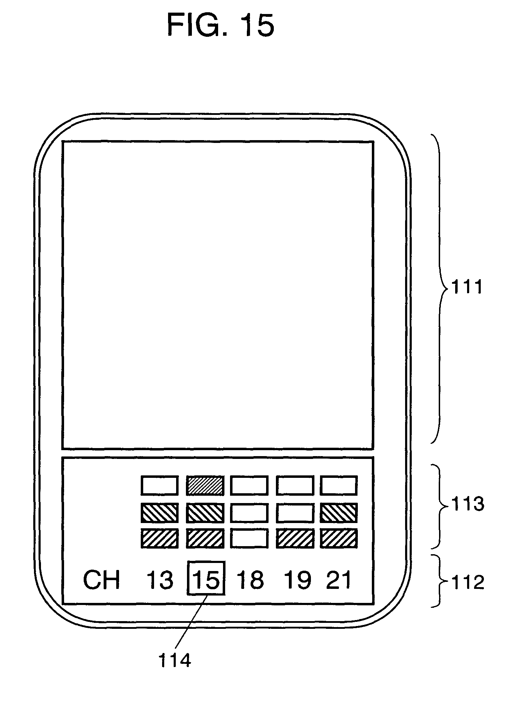

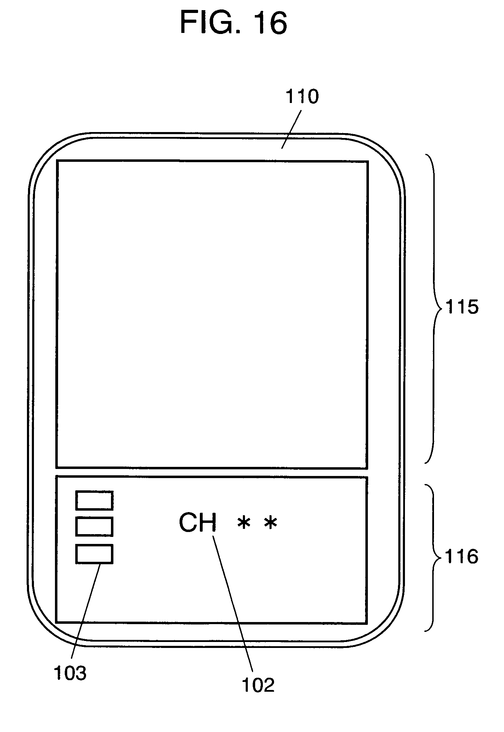

When channel scan button 95a is pushed, cursor 114 moves sequentially every push as shown in Fig. 15. When cursor 114 reaches a desired channel and channel scan button 95a is pushed for some long time at that position, TV screen 115 is displayed on screen 110 as shown in Fig. 16.

At this time, the received channel number and radio wave receiving quality 103 are displayed in lower part 116 on screen 110. All channel numbers and radio wave receiving quality 103 may be displayed as shown in Fig. 15.

Since this mobile device displays radio wave receiving quality 103, even when radio wave receiving quality 103 is low, radio wave receiving quality 103 can be visually increased by moving the mobile device.

### (FOURTH EMBODIMENT)

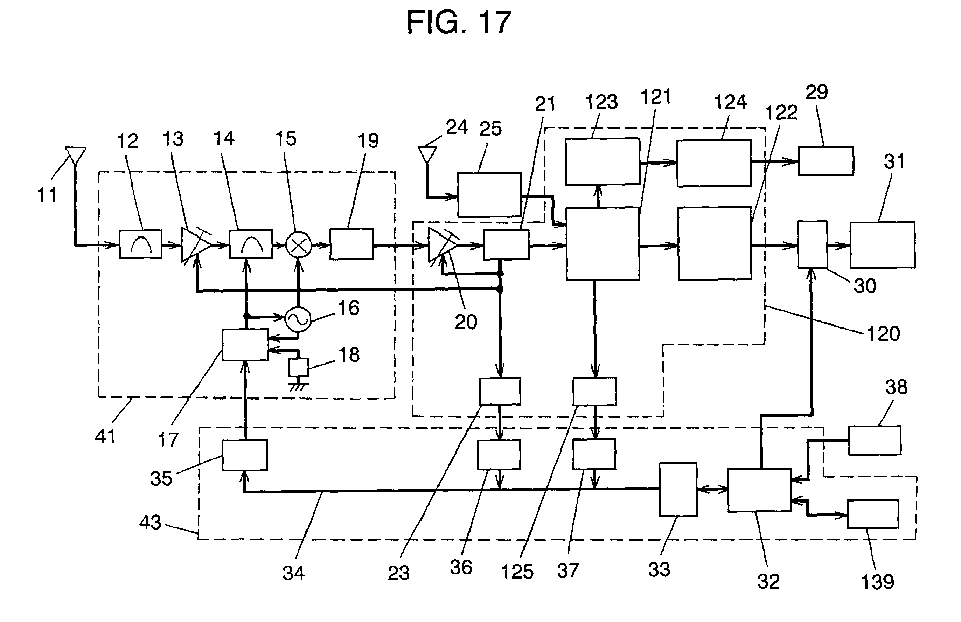

Fig. 17 is a block diagram of a mobile device in accordance with exemplary embodiment 4 of the present invention. The mobile device of exemplary embodiment 4 receives analog broadcast waves. Baseband processing unit 120 is different from that of exemplary embodiment 1. Therefore, only baseband processing unit 120 and its periphery are described. Elements similar to those in exemplary embodiment 1 are denoted with the same reference numbers, and the descriptions of those elements are simplified.

In Fig. 17, an analog broadcast wave is fed into antenna 11 and is then fed into tuner unit 41. The output unit of tuner unit 41 is connected to IFAGC 20. The output unit of IFAGC 20 is connected to level detector 21, the output unit of level detector 21 is connected to video detector 121 and RSSI detector 23.

The output unit of video detector 121 is connected to driver 30 via video signal processing unit 122. Thus, a video is displayed. Regarding to voice, the output unit of video detector 121 is connected to voice detector 123, and the output unit of voice detector 123 is connected to speaker 29 via voice signal processing unit 124.

The output unit of video detector 121 is connected to S/N detector 125, and the output unit of S/N detector 125 is connected to A/D converter 37. The output unit of transmitting/receiving unit 25 for mobile phone is connected to the input unit of video detector 121.

Baseband processing unit 120 is formed of IFAGC 20, level detector 21, RSSI detector 23, video detector 121, video signal processing unit 122, voice detector 123, voice signal processing unit 124, and S/N detector 125.

Both of baseband processing unit 120 of exemplary embodiment 4 and baseband processing unit 42 of exemplary embodiment 1 can be mounted in the same case. The mobile device can thus receive both a digital broadcast and an analog broadcast by selection by a switch.

The operations of exemplary embodiment 4 are substantially the same as those of exemplary embodiment 1. For extracting radio wave receiving quality, S/N information is used in exemplary embodiment 4, differently from exemplary embodiment 1 where C/N information is used. The extraction of RSSI information of exemplary embodiment 4 is the same as that of exemplary embodiment 1.

### INDUSTRIAL APPLICABILITY

A mobile device of the present invention is effective as a mobile device with a TV function, because it does not require search for an available channel.

## Claims

1. A mobile device that receives TV broadcast waves, displays the TV broadcast waves on a display unit, and is stored in a portable case, the mobile device comprising:
an antenna for receiving the TV broadcast waves;
a tuner unit that is coupled to the antenna, receives the plurality of TV broadcast waves, and selects a station;
a baseband processing unit coupled to an output unit of the tuner unit;
a display unit coupled to an output unit of the baseband processing unit via a driver; and
a control unit coupled to the tuner unit, the baseband processing unit, and the driver,
wherein the mobile device supplies station selection data from the control unit, sequentially scans the TV broadcast waves with the tuner unit, acquires information of radio wave receiving quality of each of the TV broadcast waves received at that time, and displays the information of the radio wave receiving quality on the display unit.

2. The mobile device according to claim 1,
wherein the mobile device displays the information of the radio wave receiving quality with different display area size or color every TV broadcast wave.

3. The mobile device according to claim 2,
wherein the mobile device has an input unit coupled to the control unit, and specifies a scan operation using the input unit to start a scan.

4. The mobile device according to claim 3,
wherein the mobile device uses an RSSI signal supplied from the baseband processing unit as information of radio wave receiving quality.

5. The mobile device according to claim 3,
wherein the mobile device uses a C/N signal or an S/N signal supplied from the baseband processing unit as information of radio wave receiving quality.

6. The mobile device according to claim 3,
wherein the mobile device specifies a desired TV broadcast wave from a screen that is displayed on the display unit by a station selecting operation from the input unit.

7. The mobile device according to claim 6,
wherein the mobile device returns the display unit to a state before TV watch by a stopping operation from the input unit, and then turns off the power of the tuner section.

8. The mobile device according to claim 3,
wherein the information of the radio wave receiving quality is displayed like a band.

9. The mobile device according to claim 3,
wherein the information of the radio wave receiving quality is samnail-displayed.

10. The mobile device according to claim 3,
wherein a transmitting/receiving unit for mobile phone is coupled to the baseband processing unit.

11. The mobile device according to claim 10, comprising:
first and second cases capable of being overlaid or opened;
a transmitting/receiving unit for mobile phone and a control unit that are disposed in the first case;
and a tuner unit, a baseband processing unit, and a display unit that are disposed in the second case.

12. The mobile device according to claim 11, wherein
one of the first and second cases is openable or closable via a hinge unit disposed on the end sides of the cases,
an input unit is disposed on a surface of the first case facing the second case, and
the display unit is disposed on a surface of the second case facing the first case.

13. The mobile device according to claim 11, wherein
the first and second cases are slidable via side surfaces of the cases,
an input unit is disposed on a surface of the first case facing the second case, and
the display unit is disposed on a surface of the second case facing the first case.

14. The mobile device according to claim 11, wherein
the first and second cases are openable or closable via a hinge unit disposed on the end sides of the cases,
an input unit is disposed on a surface of the first case facing the second case, and
the display unit is disposed on a surface of the second case facing the first case.

15. The mobile device according to claim 11,
wherein a sub display unit is disposed on a back side of the display unit disposed in the second case.

16. The mobile device according to claim 15, wherein
a sub display is displayed on the second case side when the first case is overlaid on the second case, and
the display unit comes into view when the first case and the second case are mutually opened.
